# EUROPÄISCHE PATENTSCHRIFT

(11) **EP 1 319 559 B1**
(45) Veröffentlichungstag und Bekanntmachung des Hinweises auf die Patenterteilung: **29.03.2006**
(21) Anmeldenummer: 02027371.0
(22) Anmeldetag: 09.12.2002
(51) Int. Cl.: B60R 21/34

(54) **Kraftfahrzeug mit einer Sicherheitseinrichtung für Fussgänger**
Motor vehicle with a safety device for pedestrians
Véhicule automobile comportant un système de protection pour piétons

(30) Priorität: 14.12.2001 DE 10161872
(43) Veröffentlichungstag der Anmeldung: 18.06.2003
(73) Patentinhaber: Bayerische Motoren Werke Aktiengesellschaft, 80809 München (DE)
(72) Erfinder: Dockweiler, Achim, 81829 München (DE); Rathgeb, Christian, 85293 Reichertshausen (DE)

(56) Entgegenhaltungen:
- DE-A- 10 020 658
- DE-A- 10 059 203
- DE-A- 10 059 222
- DE-A- 19 918 202
- DE-A- 19 935 342
- GB-A- 2 316 371
- PATENT ABSTRACTS OF JAPAN vol. 2002, no. 03, 3. April 2002 (2002-04-03) -& JP 2001 322518 A (MAZDA MOTOR CORP), 20. November 2001 (2001-11-20)
- PATENT ABSTRACTS OF JAPAN vol. 1996, no. 11, 29. November 1996 (1996-11-29) -& JP 08 183423 A (TOYOTA MOTOR CORP;AISIN SEIKI CO LTD; TOYODA GOSEI CO LTD), 16. Juli 1996 (1996-07-16)
- PATENT ABSTRACTS OF JAPAN vol. 1995, no. 09, 31. Oktober 1995 (1995-10-31) -& JP 07 156749 A (TOYOTA MOTOR CORP;OTHERS: 01), 20. Juni 1995 (1995-06-20)

## Beschreibung

Die Erfindung betrifft ein Kraftfahrzeug mit einer Sicherheitseinrichtung für Fußgänger gemäß dem Oberbegriff des Anspruchs 1.

Aus der DE 100 20 658 A ist bereits ein die Gattung bildendes Kraftfahrzeug mit einer Sicherheitseinrichtung für Fußgänger bekannt. Nachdem ein zur Sicherheitseinrichtung gehörendes Sensorsystem ein vor einem vorderen Abschnitt einer Karosserie befindliches Hindernis erfasst hat und eine rechtzeitige Aktivierung der jeweils vorhandenen Anzahl an Gaskissen bewirkt hat, wird gleichzeitig ein vorderer Teilabschnitt der Karosserie von der Karosserie getrennt, so dass ein Zwischenraum zwischen dem vorderen Teilabschnitt und der übrigen Karosserie entsteht. Entsprechend dem vorgesehenen Zwischenraum ist das Gaskissen beabstandet zu einem Stoßfänger in einem Abschnitt einer Fronthaube vorgesehen, um den Zwischenraum im aktivierten Zustand des Gaskissens überdecken zu können. In diesem Zwischenraum kann beispielsweise ein weiteres Gaskissen zur Dämpfung und/oder Abstützung angeordnet sein, das gleichzeitig mit dem als Aufprallschutz für einen Fußgänger dienende Gaskissen aktiviert ist.

Aus der DE 199 18 202 A ist bereits ein Sicherheitsstoßfänger für ein Kraftfahrzeug bekannt, der mindestens einen Raum aufweist, in dem ein aufblasbares Gaskissen angeordnet ist. Dieser Raum für das Gaskissen ist nach oben in Richtung einer Fronthaube über eine gelenkig angeordnete Klappe verschließbar. Nach einer Aktivierung des Gaskissens über ein Sensorsystem überdeckt das Gaskissen einen stirnseitigen Abschnitt des vorderen Bereichs des Kraftfahrzeuges sowie einen vorderen Teilabschnitt der Fronthaube.

Aus der DE 41 14 016 A1 ist bereits ein Kraftfahrzeug mit einer Sicherheitseinrichtung bekannt, bei der durch Sensoren gesteuert mindestens ein aufblasbares Gaskissen an einem Vorderbau und/oder einem Heck eines Kraftfahrzeuges vor dem Aufprall auf ein Hindernis aufgeblasen wird. Durch das Gaskissen kann eine zusätzliche Verformungszone der Karosserie und/oder ein Aufprallschutz für sonstige Verkehrsteilnehmer, wie Fußgänger, Radfahrer, geschaffen werden. Im aufgeblasenen Zustand der Gaskissen wird eine Stirnseite des Vorderbaus oder des Hecks des Kraftfahrzeuges abgedeckt.

Aufgabe der Erfindung ist es, ein Kraftfahrzeug mit einer Sicherheitseinrichtung für Fußgänger zu schaffen, mit der ein Verletzungsrisiko für Fußgänger verringert ist.

Diese Aufgabe wird durch die Merkmale des Anspruchs 1 gelöst.

Die erfindungsgemäße Sicherheitseinrichtung weist mindestens ein aufblasbares Gaskissen auf, das mindestens einen sicherheitsrelevanten, vorderen Bereich eines Deckels oder einer Haube, z.B. für einen Motor, über die Breite der Haube im aufgeblasenen Zustand abdeckt. Der sicherheitsrelevante Bereich ergibt sich beispielsweise dadurch, dass zumindest ein Kopf- und Schulterbereich eines Erwachsenen geschützt ist, wenn der Erwachsene mit seinem Oberkörper auf die Haube auftrifft.

Durch die Anordnung von mindestens zwei aufblasbaren Gaskissen in einem Bereich vor der Haube können die Behälter zur Aufbewahrung der Gaskissen kleiner ausgelegt werden.

Die vorhandene Anzahl an aufblasbaren Gaskissen ist platzsparend und unauffällig hinter der Stoßfänger-Verkleidung und/oder in freien Abschnitten zwischen den Beleuchtungsmitteln und einem Kühlergrill angeordnet.

Durch entsprechende pyrotechnische oder hydraulische Vorrichtungen kann ein Behälter, in dem sich ein aufblasbares Gaskissen befindet, mit der erforderlichen Schnelligkeit aus einer Ruheposition in eine Zündposition gebracht werden.

Vorteilhafterweise sind Sensoren zum Erkennen eines Hindernisses vor dem Kraftfahrzeug in der Stoßfängerverkleidung integriert.

In einer vorteilhaften Ausführungsform ist das jeweilige, aufblasbare Gaskissen birnenförmig bzw. konusförmig ausgebildet, so dass an einem oberen Ende des Gaskissens eine größere Aufprallfläche zur Verfügung steht.

Eine Ausführungsform der Erfindung wird nachstehend anhand der Zeichnungen beispielshalber beschrieben. Dabei zeigen:
- Figur 1.: eine Seitenansicht eines teilweise geschnittenen vorderen Abschnitt eines Kraftfahrzeuges, mit einem auf einer Haube befindlichen, aufgeblasenen Gaskissen und
- Figur 2: eine perspektivische Ansicht von vorne auf den in der Fig. 1 gezeigten vorderen Abschnitt eines Kraftfahrzeuges.

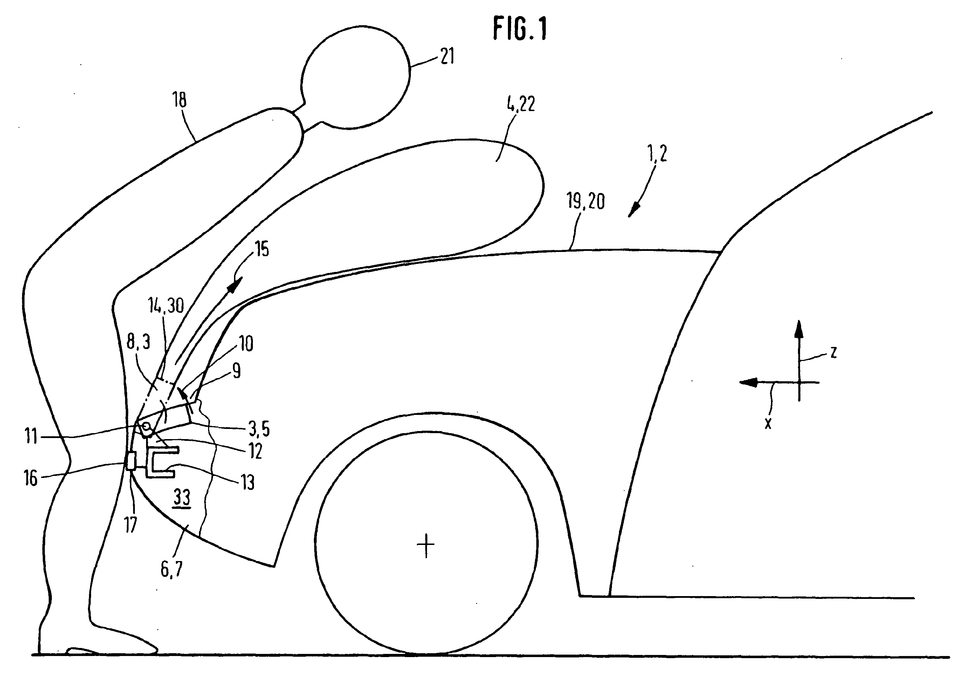

Die Figur 1 zeigt einen Vorderbau oder vorderen Abschnitt 2 einer Karosserie eines Kraftfahrzeuges 1. Ein Behälter 3 zur Aufnahme eines Gaskissens 4 wurde aus einer Ruheposition 5 in einem Hohlraum 33 unterhalb einer Verkleidung 6 eines Stoßfängers 7 in eine Zündposition 8 außerhalb des Stoßfängers 7 verlagert. In der Zündposition 8 befindet sich zumindest eine Austrittsöffnung 14 des Behälters 3 oberhalb einer in etwa waagerechten Oberseite 9 des Stoßfängers 7.

Die Positionierung des Behälters 3 aus der Ruheposition 5 in die Zündposition 8 erfolgt in der gezeigten Ausführungsform entsprechend einem Pfeil 10 um eine Drehachse 11 eines Lagers 12. Das Lager 12 ist auf einem Querträger 13 des Stoßfängers 7 befestigt. Aus der Austrittsöffnung 14 des Behälters 3 wird das Gaskissen 4 aus der Zündposition 8 in Richtung eines Pfeils 15 schräg nach oben zu einer Haube 20 geblasen. Das Verschwenken des Behälters 3 und die Zündung des Gaskissens 4 wird durch Sensoren 16 ausgelöst, die sich an einer Stirnseite 17 des Stoßfängers 7 befinden.

In der in der Figur 1 gezeigten Unfallsituation eines Aufpralls eines Fußgängers 18 mit dem vorderen Abschnitt 2 des Kraftfahrzeuges 1 wurde das Gaskissen 4 über eine nicht dargestellte Befüllvorrichtung aufgeblasen. Die Länge des Gaskissens 4 ist so bemessen, dass sich ein oberes Ende 22 des aufgeblasenen Gaskissens 4 soweit über einen vorderen Bereich 19 einer Haube 20 erstreckt, dass ein Kopf 21 eines erwachsenen Fußgängers 18 aufgefangen wird.

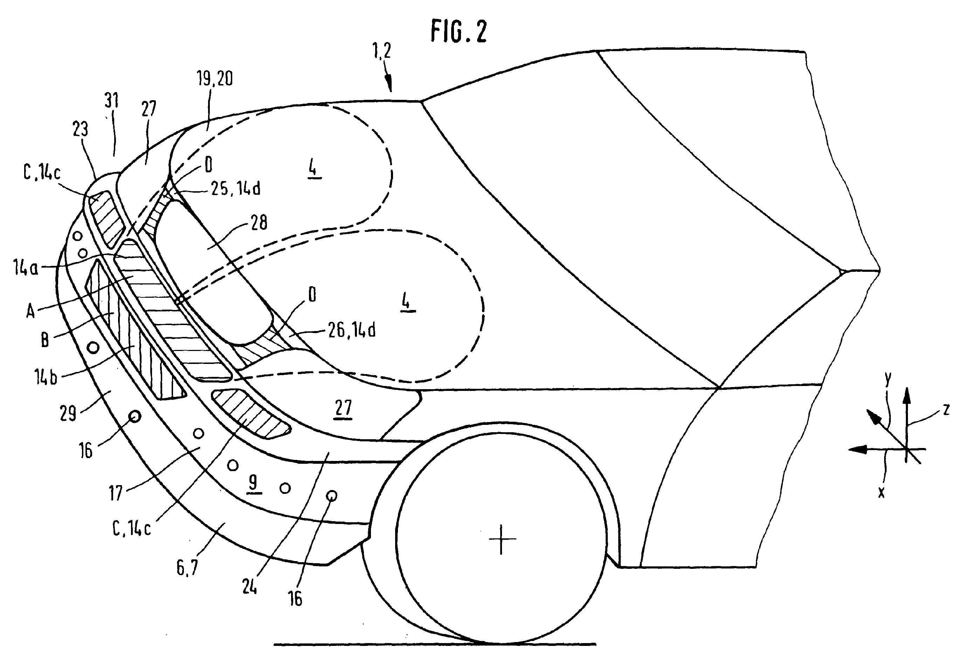

In der Figur 2 sind zwei Gaskissen 4 in gestrichelten Linien dargestellt, die im aktivierten Zustand die gesamte Breite des vorderen Bereiches 19 der Haube 20 abdecken. Ferner sind in der Figur 2 vier verschiedene Anordnungsmöglichkeiten A, B, C und D von Gaskissen 4 in der Ruheposition 5 durch schraffierte Flächen angedeutet.

So können die vorhandenen Gaskissen 4 unterhalb der Verkleidung 6 des Stoßfängers 7 in den Positionen A und B in einem mittleren Bereich des Stoßfängers 7 angeordnet sein. Bei einer Aktivierung der Gaskissen 4 über die Sensoren 16 treten die Gaskissen 4 jeweils über eine an der Oberseite 9 oder an der Stirnseite 17 des Stoßfängers 7 ausgebildete Austrittsöffnung 14a, 14b in Richtung des vorderen Bereiches 19 der Haube 20 nach oben aus.

Eine weitere Unterbringung C der Gaskissen 4 besteht darin, dass an den seitlichen Randbereichen 23 und 24 des Stoßfängers 7 jeweils eine Austrittsöffnung 14c vorgesehen sind.

Ferner besteht die Möglichkeit D in Zwischenräumen 25, 26 zwischen Beleuchtungsmittel 27 und einem Kühlergrill 28 Austrittsöffnungen 14d anzuordnen. Aus der Figur 2 geht ferner die Anordnung der Sensoren 16 an der Stirnseite 17 des Stoßfängers 7 sowie an einem Spoiler 29 hervor.

## Patentansprüche

1. Kraftfahrzeug (1) mit einer Sicherheitseinrichtung für Fußgänger, wobei an einem vorderen Abschnitt (2) einer Karosserie eine Haube (20) vorgesehen ist, die sich zwischen einer Windschutzscheibe und einer Stoßfängervorrichtung (7) erstreckt, mit einer Sicherheitseinrichtung, die mindestens ein aufblasbares Gaskissen (4) und eine dazugehörige Befüllvorrichtung aufweist, mit einem Sensorsystem, dessen Sensoren (16) am vorderen Abschnitt (2) der Karosserie angeordnet sind, wobei das Sensorsystem ein vor dem vorderen Abschnitt (2) der Karosserie befindliches Hindernis erfasst und eine rechtzeitige Aktivierung der jeweils vorhandenen Anzahl an Gaskissen (4) bewirkt, wobei die vorhandene Anzahl an Gaskissen (4) im aufgeblasenen Zustand zumindest einen vorderen Bereich (19) der Haube (20) abdeckt, wobei sich die vorhandene Anzahl an aufgeblasenen Gaskissen (4) in Fahrzeugquerrichtung y zumindest über die gesamte Breite der Haube (20) und in Fahrzeuglängsrichtung x mindestens soweit erstreckt, dass bei einem Zusammenstoß mit einem Fußgänger (18) ein Kopf (21) des Fußgängers (18) vor einem oberen Ende (22) des Gaskissens (4) auf das Gaskissen (4) trifft,
**dadurch gekennzeichnet, dass** die vorhandene Anzahl an Gaskissen (4) in jeweils einem Behälter (3) angeordnet ist, dass der jeweilige Behälter (3) in einer Ruheposition (5) innerhalb eines abgedeckten Bereiches der Karosserie (7, 25, 26, 29,) angeordnet ist und dass der jeweilige Behälter (3) aus der Ruheposition (5) in eine ausgelagerte Position (8) bringbar ist, in der eine Austrittsöffnung (14) des Behälters (3) in Richtung der Haube (20) zeigt, so dass das jeweilige Gaskissen (4) nach einer Aktivierung nach oben in Richtung der Haube (20) austreten kann.

2. Kraftfahrzeug nach Anspruch 1,
**dadurch gekennzeichnet, dass** jeweils ein unteres Ende (30) der vorhandenen Anzahl an Gaskissen (4) einen vorderen, stirnseitigen Bereich (31) zwischen dem Stoßfänger (7) und der Haube (20) im aktivierten Zustand abdeckt.

3. Kraftfahrzeug nach den vorhergehenden Ansprüchen 1 oder 2,
**dadurch gekennzeichnet, dass** der jeweilige Behälter (3) vor einer Aktivierung der vorhandenen Anzahl an Gaskissen (4) pyrotechnisch oder hydraulisch in die ausgelagerte Position (8) bringbar ist.

4. Kraftfahrzeug nach einem der vorhergehenden Ansprüche,
**dadurch gekennzeichnet, dass** die Sensoren (16) im Stoßfänger (7) und/oder in einem darunter befindlichen Spoiler oder einer Verkleidung (29) eingebaut sind.

## Claims

1. A motor vehicle (1) with a safety device for passengers, wherein a bonnet (20) is provided on a front portion (2) of a vehicle body and extends between a windscreen and a bumper device (7), also comprising a safety device formed of at least one inflatable gas cushion (4) and an associated filling device, and with a sensor system comprising sensors (16) disposed on the front portion (2) of the body, wherein the sensor system detects an obstacle in front of the front portion (2) of the body and promptly activates the available number of gas cushions (4), whereupon the available number of gas cushions (4), when inflated, cover at least one front region (19) of the bonnet (20), wherein the available number of inflated gas cushions (4) extend at least along the entire width of the bonnet (20) in the transverse direction (y) of the vehicle and extend in the longitudinal direction (x) of the vehicle at least sufficiently, in the event of a collision with a pedestrian (18), for a head (21) of the pedestrian (18) to strike the gas cushion (4) in front of a top end (22) of the gas cushion (4),
**characterised in that** the available number of gas cushions (4) are disposed in respective containers (3), each container (3) is disposed in an inoperative position (5) inside a covered region of the body (7, 25, 26, 29) and each container (3) can be brought out of the inoperative position (5) into a moved-out position (8) in which an outlet opening (14) of the container (3) points in the direction of the bonnet (20), so that the respective gas cushion (4) after activation can exit upwards in the direction of the hood (20).

2. A vehicle according to claim 1, **characterised in that** a bottom end (30) of each of the available number of gas cushions (4) covers a front surface region (31) between the bumper (7) and the bonnet (20) when activated.

3. A vehicle according to the preceding claim 1 or 2, **characterised in that** each container (3) can be brought into the moved-out position (8) by pyrotechnic or hydraulic means before actuation of the available number of gas cushions (4).

4. A vehicle according to any of the preceding claims, **characterised in that** the sensors (16) are incorporated in the bumper (7) and/or in a spoiler underneath or in a cover (29).

## Revendications

1. Véhicule automobile (1) comportant un dispositif de sécurité pour piétons, dans lequel, sur une section avant (2) d'une carrosserie, un capot (20) s'étend entre un pare-brise et un système pare-chocs (7) et comprend un dispositif de sécurité présentant au moins un coussin de sécurité gonflable (4) avec un système de remplissage, un système de détection, dont les capteurs (16) sont disposés sur la section avant (2) de la carrosserie, ce système détectant un obstacle se trouvant devant la section avant (2) de la carrosserie et entraînant une activation immédiate des différents coussins de sécurité (4) respectivement disposés, les coussins de sécurité (4) gonflés recouvrant au moins une zone avant (19) du capot (20), en s'étendant, dans le sens transversal y du véhicule, au moins sur toute la largeur du capot (20) et, dans le sens longitudinal x du véhicule, de façon qu'en cas de collision avec un piéton (18), la tête (21) de celui-ci touche le coussin de sécurité (4) à l'avant de son extrémité supérieure (22),
**caractérisé en ce que**
les différents coussins de sécurité (4) sont disposés chaque fois dans un boîtier (3), chaque boîtier (3) est disposé, en position de repos (5), à l'intérieur d'une zone recouverte de la carrosserie (7, 25, 26, 29) et peut être amené de la position de repos (5) à une position d'amorçage (8) dans laquelle une ouverture de sortie (14) du boîtier (3) est présentée en direction du capot (20) de sorte que le coussin de sécurité (4) respectif puisse sortir vers le haut, après activation, en direction du capot (20).

2. Véhicule automobile selon la revendication 1,
**caractérisé en ce qu'**
une extrémité inférieure (30) des différents coussins de sécurité (4) activés recouvre chaque fois une zone avant située côté frontal (31) entre le pare-chocs (7) et le capot (20).

3. Véhicule automobile selon les revendications précédentes 1 ou 2,
**caractérisé en ce qu'**
avant l'activation des différents coussins de sécurité (4), le boîtier (3) respectif peut être amené en position déployée (8) de manière pyrotechnique ou hydraulique.

4. Véhicule automobile selon l'une des revendications précédentes,
**caractérisé en ce que**
les capteurs (16) sont montés dans le pare-chocs (7) et/ou dans un becquet (spoiler) situé en dessous ou dans un revêtement (29).
